# FASCICULE DE BREVET EUROPEEN

(11) **EP 4 565 474 B1**
(45) Date de publication et mention de la délivrance du brevet: **27.05.2026**
(21) Numéro de dépôt: 23755457.1
(22) Date de dépôt: 29.06.2023
(51) Int. Cl.: B62D 25/04, B62D 27/02, B62D 25/06

(54) **STRUCTURE DE VÉHICULE AUTOMOBILE ET VÉHICULE AUTOMOBILE COMPORTANT UNE TELLE STRUCTURE**
KRAFTFAHRZEUGSTRUKTUR UND KRAFTFAHRZEUG MIT EINER SOLCHEN STRUKTUR
MOTOR VEHICLE STRUCTURE, AND MOTOR VEHICLE COMPRISING SUCH A STRUCTURE

(30) Priorité: 02.08.2022 FR 2208010
(43) Date de publication de la demande: 11.06.2025
(73) Titulaire: Stellantis Auto SAS, 78300 Poissy (FR)
(72) Inventeur: BENANE, Said, 94240 L HAY LES ROSES (FR)
(74) Mandataire: BCIP
(86) Numéro de dépôt international: PCT/FR2023/050999
(87) Numéro de publication internationale: WO 2024/028548

(56) Documents cités:
- FR-A1- 3 115 754
- JP-B2- 4 704 738
- US-A1- 2016 107 702

## Description

La présente invention revendique la priorité de la demande française 2208010 déposée le 02 août 2022. L'invention a trait au domaine des véhicules automobiles, plus particulièrement au comportement en déformation des véhicules automobiles en cas de choc latéral et en cas de choc pavillon, et concerne une structure de véhicule automobile ainsi qu'un véhicule automobile comportant une telle structure.

### [Etat de la technique antérieure]

La structure d'un véhicule automobile est généralement constituée par des tôles assemblées entre elles pour procurer la rigidité à la structure, formant l'ossature du véhicule automobile.

Parmi ces éléments de tôle, des structures notamment latérales gauche et droite équipent la structure et comportent chacune un élément vertical avant, comportant un pied avant, un élément vertical arrière comportant un pied arrière, et un ensemble d'éléments horizontaux supérieur et inférieur reliant les éléments verticaux avant et arrière.

Des pieds centraux, montés entre les pieds avant et arrière raccordent le soubassement du véhicule à un pavillon de toit maintenu latéralement par des poutres d'un arc pavillon.

Le pavillon de toit est renforcé par une traverse transversale médiane reliant les poutres de l'arc pavillon entre elles au niveau des pieds centraux de la structure et/ou par une traverse transversale arrière reliant les poutres de l'arc pavillon entre elles au niveau des pieds arrières de la structure.

La traverse transversale arrière est fixée, au niveau de ses extrémités gauche et droite, aux poutres respectives de l'arc pavillon, par exemple par l'intermédiaire de supports de caisse.

Sur les supports de caisse sont entre outre fixées rigidement, par soudure, des charnières du coffre arrière du véhicule automobile.

Le document JP4704738 B2 donne un exemple de réalisation d'une charnière de coffre arrière. La charnière consiste en une pièce comportant deux faces rigides, sensiblement perpendiculaires et définissant une forme de « L ». Le document FR 3 115 754 A1 divulgue une structure de véhicule automobile selon le préambule de la revendication 1.

Parmi la pluralité de tests utilisés pour l'homologation des véhicules automobiles, un test visant à évaluer la tenue des ancrages des ceintures de sécurité au niveau de la banquette arrière est pratiqué.

Ce test a pour but de simuler le comportement des points d'ancrage des ceintures de sécurité lors d'un choc frontal du véhicule sur un obstacle, afin de s'assurer que les points d'ancrage ne se détachent pas et transmettent bien les efforts.

Ce test consiste à exercer des efforts de traction, au moyen de vérins, au niveau des points d'ancrage des ceintures de sécurité arrière.

Généralement, le véhicule comporte deux points d'ancrage par ceinture, soit six points d'ancrage au niveau de la banquette arrière du véhicule.

Les efforts exercés pour ce test sont des efforts de traction le long de l'axe longitudinal du véhicule, et chacun des six points d'ancrage subit typiquement une traction de l'ordre de 1 500 daN par point d'ancrage.

Lorsque ces efforts de traction sont appliqués, l'ensemble de la structure de véhicule est sollicité. En particulier, le pavillon de toit s'affaisse et la traverse transversale arrière, reliant les poutres de l'arc pavillon au niveau des pieds arrières de la structure, pivote autour de son axe longitudinal.

Compte tenu de la rigidité des charnières de coffre et de la liaison rigide entre les charnières de coffre et le support de caisse, le pivotement de la traverse arrière entraîne un effort de cisaillement important au niveau des points de soudure entre les charnières de coffre et le support de caisse.

Cet effort de cisaillement peut entraîner un déboutonnage au niveau des zones de la structure de véhicule contenant les charnières, engendrant une forte déformation de la structure de véhicule au niveau de la traverse arrière.

### [Exposé de l'invention]

La présente invention vise à surmonter les inconvénients précités, et concerne pour ce faire une structure de véhicule automobile, comprenant :
- deux poutres d'arc pavillon, s'étendant longitudinalement relativement à ladite structure,
- un anneau arrière transversal, reliant entre elles lesdites poutres d'arc pavillon,
- un support de caisse, sur lequel est fixée, d'une part, une extrémité transversale dudit anneau arrière et, d'autre part une extrémité arrière d'au moins une desdites poutres d'arc pavillon,
ladite structure étant remarquable en ce qu'elle comporte :
- une jambe limiteur d'effort, fixée sur ledit support de caisse, destinée à supporter une charnière de coffre arrière de véhicule et comportant au moins deux emboutis en marche d'escalier s'étendant verticalement relativement à ladite structure, et
- une bretelle anti-soulèvement dudit support de caisse, agencée dans ladite structure pour exercer un effort de compression sur une face supérieure dudit support de caisse.

Ainsi, en prévoyant d'équiper la structure par une jambe limiteur d'effort comportant au moins au moins deux emboutis en marche d'escalier s'étendant verticalement relativement à ladite structure, on réduit la raideur de la structure au niveau des zones de liaison entre les charnières de coffre et le support de caisse.

En réduisant la raideur, on favorise la rotation des charnières de coffre lorsque e véhicule subit un choc frontal, ce qui permet d'éviter un déboutonnage des points de soudure entre les charnières de coffre et le support de caisse.

L'effort de soulèvement subi par le support de caisse est quant à lui maîtrisé et limité grâce à la bretelle anti-soulèvement qui est agencée dans la structure pour exercer un effort de compression sur une face supérieure du support de caisse.

Selon des caractéristiques optionnelles de la structure selon l'invention :
- ladite bretelle anti-soulèvement s'étend sensiblement longitudinalement le long d'au moins une desdites poutres d'arc pavillon ;
- ladite bretelle anti-soulèvement comporte une extrémité de fixation arrière fixée sur ladite face supérieure dudit support de caisse ;
- ladite extrémité de fixation arrière de ladite bretelle anti-soulèvement comporte une fourchette ;
- ladite bretelle anti-soulèvement comporte une extrémité de fixation avant fixée sur une traverse transversale de ladite structure, ladite traverse transversale étant située en avant dudit anneau arrière relativement à un axe longitudinal de ladite structure ;
- ladite bretelle anti-soulèvement comporte une face longitudinale comportant, au niveau de l'une de ses extrémités, ladite extrémité de fixation arrière, et ladite bretelle anti-soulèvement comporte un embouti de liaison assurant la jonction entre ladite face longitudinale et ladite extrémité de fixation arrière ;
- ladite jambe limiteur d'effort s'étend dans le prolongement transversal dudit anneau arrière ;
- chacun desdits au moins deux emboutis en marche d'escalier de la jambe limiteur d'effort comporte une première face, sensiblement horizontale relativement à ladite structure et une deuxième face, s'étendant depuis une extrémité arrière de ladite première face, sensiblement verticale relativement à ladite structure ;
- la jambe limiteur d'effort s'étend verticalement depuis le support de caisse jusqu'à une gouttière de la structure, destinée à border latéralement un coffre du véhicule.

L'invention concerne aussi un véhicule automobile comportant une structure, remarquable en ce que ladite structure est obtenue selon l'invention.

### [Description des dessins]

D'autres caractéristiques, buts et avantages de l'invention apparaîtront à la lecture de la description détaillée qui suit pour la compréhension de laquelle on se reportera aux dessins annexés dans lesquels :
[Fig. 1] est une vue en perspective d'une structure de véhicule automobile selon l'invention.
[Fig. 2] est un agrandissement de la zone II de la figure 1.
[Fig. 3] est un agrandissement de la zone III de la figure 2.
[Fig. 4] est un agrandissement de la zone IV de la figure 3.
[Fig. 5] est une vue analogue à celle de la figure 3, montrant une bretelle anti-soulèvement selon l'invention.
[Fig. 6] illustre les étapes de la cinématique subie par la structure selon l'invention lorsqu'un test visant à évaluer la tenue des ancrages des ceintures de sécurité est pratiqué.

### [Description des modes de réalisation]

Dans la suite de la description, des éléments présentant une structure identique ou des fonctions analogues sont désignés par une même référence.

On adoptera par convention, à titre non limitatif, des orientations longitudinale, verticale et transversale indiquées par le trièdre direct (L, V, T) désignant les axes longitudinal, vertical et transversal du véhicule.

Dans ce qui suit, les termes « avant », « arrière », « gauche », « droit », « inférieur » et « supérieur » s'entendent par rapport au véhicule.

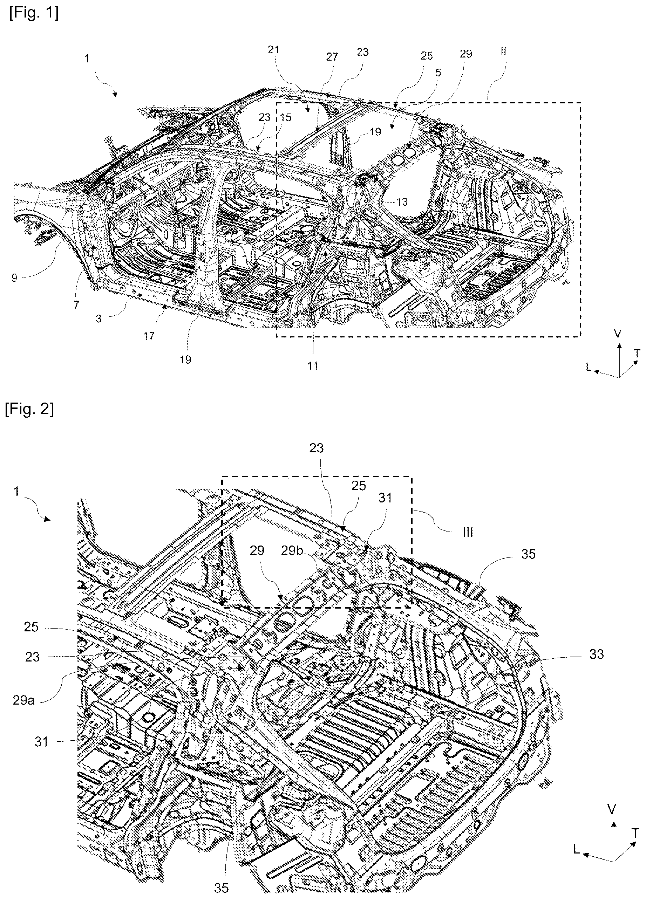

On se réfère à la figure 1 montrant en vue isométrique arrière gauche une structure 1 ou caisse de véhicule automobile obtenue selon l'invention.

La structure 1 comporte un ensemble d'éléments de tôle, assemblés les uns aux autres et formant l'ossature du véhicule automobile.

Parmi ces éléments de tôle, des structures notamment latérales gauche et droite équipent la structure 1.

Une structure latérale gauche 3 et une structure latérale droite 5 sont visibles à la figure 1. La structure 1 admet un plan médian longitudinal de symétrie. Ainsi, la description faite pour la structure latérale gauche 3 s'applique par analogie à la structure latérale droite 5 de la structure 1.

La structure latérale gauche 3 comporte un élément vertical avant 7, comportant un pied avant 9, un élément vertical arrière 11 comportant un pied arrière 13, et un ensemble d'éléments horizontaux supérieur 15 et inférieur 17 reliant les éléments verticaux avant 7 et arrière 11.

La structure 1 comprend deux pieds centraux 19, raccordant le soubassement du véhicule à un pavillon de toit 21 et montés entre les pieds avant 9 et arrière 13 dans le sens longitudinal de la structure 1. Le pavillon de toit 21 est maintenu latéralement par des poutres 23 longitudinales d'un arc pavillon 25.

Le pavillon de toit 21 peut être renforcé transversalement par une traverse 27 de pavillon. Comme illustré aux figures, la traverse 27 est positionnée en arrière des pieds centraux 19 de la structure 1. En alternative, la traverse 27 de pavillon peut être positionnée dans le prolongement des pieds centraux 19. Aussi, en alternative, la structure 1 de véhicule peut comporter une pluralité de traverses 27 de pavillon.

La structure 1 comporte, au niveau de ses éléments verticaux arrières 11, un anneau arrière 29 transversal, situé en arrière de la traverse 27 transversale. Dans la configuration illustrée aux figures, c'est-à-dire lorsque la traverse 27 est positionnée en arrière des pieds centraux 19, l'anneau arrière 29 n'est pas structurant et relie les poutres 23 d'arc pavillon 25 entre elles au niveau des pieds arrières 13. L'anneau arrière 29 consiste en un corps de section transversale ouverte.

Selon une variante de réalisation non illustrée, lorsque la traverse 27 de pavillon est positionnée dans le prolongement des pieds centraux 19, l'anneau arrière est structurant. L'anneau arrière consiste alors en un corps creux, de section transversale fermée, dont sa géométrie peut être sensiblement identique à celle de la traverse transversale 27. Le pavillon de toit 21 est, dans ce cas, également renforcé transversalement par l'anneau arrière transversal structurant.

On se réfère à la figure 2 montrant un agrandissement de la zone II de la figure 1.

Chaque poutre 23 d'arc de pavillon 25 présente une forme d'arc de cercle s'étendant longitudinalement relativement à la structure 1 de véhicule.

L'anneau arrière 29 transversal s'étend transversalement relativement à la structure 1, et donc transversalement relativement aux poutres 23.

L'anneau arrière 29 comporte une extrémité transversale gauche 29a reliée à la poutre 23 gauche et une extrémité transversale droite 29b reliée à la poutre 23 droite.

La structure 1 comporte, au niveau des extrémités transversales 29a, 29b de l'anneau 29, deux zones 31 destinées à recevoir des charnières (non représentées) d'un coffre arrière du véhicule, le coffre (non représenté) étant destiné à être monté au niveau d'un emplacement 33 délimité en partie avant par l'anneau arrière 29 et en partie latérale par des gouttières 35.

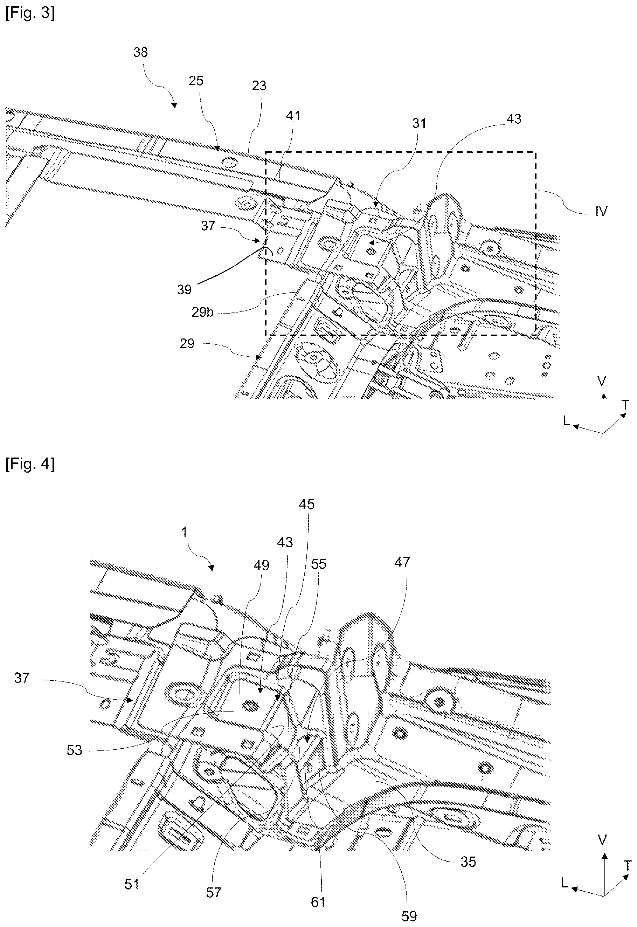

On se réfère à la figure 3 montrant un agrandissement de la zone III de la figure 2.

Selon une réalisation de l'invention, la structure 1 comporte deux supports de caisse 37, seul le support de caisse 37 droit étant visible à la figure 3.

Le support de caisse 37 comporte une face supérieure 39 sur laquelle est fixée l'extrémité transversale droite 29b de l'anneau 29 arrière.

La fixation de l'anneau arrière 29 sur le support de caisse 37 peut par exemple être opérée par soudure.

Sur la face supérieure 39 du support de caisse 37 est en outre fixée une extrémité arrière 41 de la poutre 23 longitudinale de l'arc pavillon 25.

De la même manière, la fixation de la poutre 23 longitudinale sur le support de caisse 37 peut par exemple être opérée par soudure.

Selon l'invention, la structure 1 comporte deux jambes limiteur d'effort 43, seule la jambe limiteur d'effort 43 droite étant visible à la figure 3.

La jambe limiteur d'effort 43 est destinée à supporter une charnière de coffre arrière du véhicule (non représentée aux figures). A cet effet, la jambe limiteur d'effort 43 est située dans la structure 1 au niveau de la zone 31 destinée à recevoir la charnière du coffre arrière du véhicule. Par exemple, la jambe limiteur d'effort 43 est fixée sur le support de caisse 37.

Dans une réalisation de l'invention, lad jambe limiteur d'effort 43 s'étend dans le prolongement transversal de l'anneau arrière 29.

On se réfère à la figure 4 montrant un agrandissement de la zone IV de la figure 3 afin d'illustrer plus en détail une réalisation de la jambe limiteur d'effort 43.

Selon une disposition de la structure 1, la jambe limiteur d'effort 43 comporte au moins deux emboutis 45, 47 en marche d'escalier, s'étendant verticalement relativement à la structure 1 du véhicule.

Le premier embouti 45 en marche d'escalier comporte une première face 49 sensiblement horizontale relativement à la structure 1, c'est-à-dire que la première face 49 est sensiblement contenue dans un plan (L, T).

L'embouti 45 en marche d'escalier comporte une deuxième face 51, s'étendant depuis une extrémité arrière 53 de la première face 49, au droit de la première face 49. La deuxième face 51 s'étend ainsi de façon sensiblement verticale relativement à la structure 1, c'est-à-dire que la deuxième face 51 est sensiblement contenue dans un plan (V, T).

Le deuxième embouti 47 en marche d'escalier s'étend de façon descendante depuis une extrémité inférieure 55 du premier embouti 45.

A cet effet, l'embouti 47 en marche d'escalier comporte une première face 57 sensiblement horizontale, c'est-à-dire qu'elle est sensiblement contenue dans un plan (L, T).

L'embouti 47 comporte une deuxième face 59 s'étendant depuis une extrémité arrière 61 de la première face 57, au droit de la première face 49. La deuxième face 59 s'étend ainsi de façon sensiblement verticale relativement à la structure 1, c'est-à-dire que la deuxième face 59 est sensiblement contenue dans un plan (V, T).

Dans une réalisation de l'invention, la jambe limiteur d'effort 43 s'étend verticalement depuis le support de caisse 37 jusqu'à la gouttière 35 de la structure 1 bordant latéralement le coffre du véhicule. La deuxième face 59 de l'embouti 47 en marche d'escalier s'étend ainsi depuis l'extrémité arrière 61 de la première face jusqu'à la gouttière 35 de la structure 1.

Le plan contenant la première face 49 de l'embouti 45 de la jambe limiteur d'effort 43 se trouve au-dessus du plan contenant la première face 57 de l'embouti 47 de la jambe limiteur d'effort 43, relativement à l'axe vertical de la structure 1. Ainsi, les emboutis 45, 47 s'étendent verticalement relativement à la structure 1.

Aussi, le plan contenant la deuxième face 51 de l'embouti 45 de la jambe limiteur d'effort 43 en avant du plan contenant la deuxième face 59 de l'embouti 47 de la jambe limiteur d'effort 43, relativement à l'axe longitudinal de la structure 1.

La présente invention est décrite en référence à la structure 1 dans laquelle la jambe limiteur d'effort 43 comporte deux emboutis 45, 47 en marche d'escalier. Toutefois, davantage d'emboutis en marche d'escaliers peuvent équiper la jambe limiteur d'effort de l'invention.

Comme on va le voir plus en détails dans la suite de la description, la jambe limiteur d'effort 43 permet, lorsqu'un effort de traction est exercé au niveau des points d'ancrage des ceintures de sécurité arrière, de réduire par rapport à l'art antérieur la rigidité de la liaison entre la charnière de coffre, supportée par la jambe limiteur d'effort 43, et le support de caisse 37.

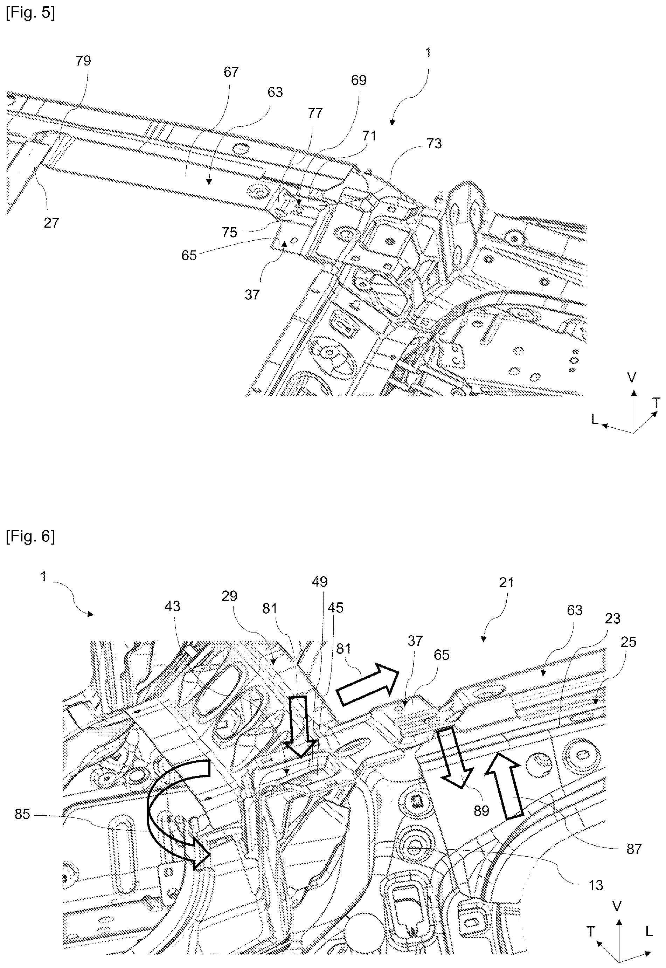

On se réfère à la figure 5 qui est une vue analogue à celle de la figure 3.

Selon une disposition de l'invention, la structure 1 comporte deux bretelles anti-soulèvement 63 du support de caisse 37, seule la bretelle anti-soulèvement 63 étant visible à la figure 5.

La bretelle anti-soulèvement 63 est agencée dans la structure 1 pour exercer un effort de compression sur une face supérieure 65 du support de caisse 37.

Pour ce faire, selon un exemple de réalisation de la bretelle anti-soulèvement 63 de l'invention, la bretelle anti-soulèvement 63 s'étend sensiblement longitudinalement le long de la poutre 23 d'arc pavillon 25.

La bretelle anti-soulèvement 63 comporte une face longitudinale 67 présentant une extrémité de fixation arrière 69 fixée sur la face supérieure 65 du support de caisse 37.

La face longitudinale 67 de la bretelle anti-soulèvement 63 est sensiblement horizontale, c'est-à-dire qu'elle est sensiblement contenue dans un plan (L, T).

Selon l'exemple de réalisation de la bretelle anti-soulèvement 63 illustrée aux figures, l'extrémité de fixation arrière 69 comporte une fourchette 71.

La fourchette 71 comporte deux pattes de fixation 73, 75 fixée sur la face supérieure 65 du support de caisse 37, notamment par exemple par soudure.

Les pattes de fixation 73, 75 de la fourchette 71 sont sensiblement horizontales, c'est-à-dire qu'elles sont sensiblement contenues dans un plan (L, T).

La jonction entre la face longitudinale 67 de la bretelle anti-soulèvement 63 et l'extrémité de fixation arrière 69 peut, dans une réalisation, être obtenue par un embouti de liaison 77.

Dans une réalisation, le plan contenant la face longitudinale 67 de la bretelle anti-soulèvement 63 se trouve au-dessus du plan contenant l'extrémité arrière 69 de la bretelle anti-soulèvement 63, relativement à l'axe vertical de la structure 1.

Selon un exemple de réalisation de la structure 1, la bretelle anti-soulèvement 63 comporte une extrémité de fixation avant 79, fixée sur la traverse transversale 27 de la structure.

Comme on va le voir plus en détails dans la suite de la description, la bretelle anti-soulèvement 63 forme une butée verticale empêchant le soulèvement du support de caisse 37 survenant lors du pivotement de l'anneau arrière 29 lorsqu'un effort de traction est exercé au niveau des points d'ancrage des ceintures de sécurité arrière.

On se réfère à la figure 6 illustrant les étapes de la cinématique subie par la structure 1 et engendrée lorsqu'un test visant à évaluer la tenue des ancrages des ceintures de sécurité au niveau de la banquette arrière est pratiqué, ce test simulant le comportement des points d'ancrage des ceintures de sécurité lors d'un choc frontal du véhicule sur un obstacle.

Comme mentionné auparavant, ce test consiste à exercer des efforts de traction vers l'avant du véhicule, le long de l'axe longitudinal du véhicule.

Le véhicule subit au niveau de la structure 1 des efforts longitudinaux schématisés par la flèche 81.

Le pavillon de toit 21, maintenu latéralement par les poutres 23 longitudinales de l'arc pavillon 25 s'affaisse, comme illustré par la flèche 83.

L'affaissement du pavillon de toit 21 entraîne un effort de rotation au niveau de l'arrière du pavillon de toit 21, engendrant un pivotement de l'anneau arrière 29 dans le sens anti-horaire (vu depuis le côté droit du véhicule), comme le montre la flèche 85.

L'anneau arrière 29, reliant les poutres 23 de l'arc pavillon au niveau des pieds arrières 13 de la structure, pivote autour de son axe longitudinal (correspondant à l'axe transversal de la structure 1).

Cet effort de rotation a pour effet d'entraîner en rotation la première face 49 sensiblement horizontale (dans un sens anti-horaire depuis le côté droit du véhicule) de l'embouti 45 de la jambe limiteur d'effort 43.

La jambe limiteur d'effort 43 permet, grâce aux emboutis 45, 47 en marche d'escalier, de réduire la raideur de la structure 1 dans cette zone relativement aux structures connues de l'art antérieur.

Sous l'effet de rotation de la première face 49 sensiblement horizontale de l'embouti 45, la deuxième face 51 sensiblement verticale (mieux visible à la figure 4) de l'embouti 45 et la deuxième face 59 sensiblement verticale (mieux visible à la figure 4) de l'embouti 47 se dégalbent en raison de la raideur réduite conférée par la présence des emboutis 45, 47 de la jambe limiteur d'effort 43, c'est-à-dire qu'elles s'enfoncent relativement aux plans qui les contiennent.

Ce dégalbage permet d'aider le pivotement de la charnière (non représentée) et permet donc d'éviter un déboutonnage des points de soudure entre la charnière de coffre et le support de caisse 37.

Sous l'effet du pivotement de l'anneau arrière 29 dans le sens anti-horaire (vu depuis le côté droit du véhicule), le support de caisse 37 subit un effort de soulèvement sensiblement vertical, comme représenté par la flèche 87.

L'effort de soulèvement est limité grâce à la bretelle anti-soulèvement 63, qui agit en compression au niveau de la face supérieure 65 du support de caisse 37.

Ainsi, grâce à la présente invention, les jambes limiteur d'effort 43 permettent de réduire la raideur de la structure 1 au niveau des zones 31 comportant les charnières de coffre. En réduisant la raideur dans ces zones, on limite l'effort au niveau des charnières, qui vont se dégalber localement.

Le dégalbage au niveau des charnières permet d'augmenter le pivotement des charnières, ce qui permet d'éviter un déboutonnage des points de soudure entre les charnières et le support de caisse 37. Le pivotement est quant à lui maîtrisé et limité grâce à la bretelle anti-soulèvement 63.

Comme il va de soi, la présente invention ne se limite pas aux seules formes de réalisation de cette structure de véhicule automobile et de ce véhicule automobile pourvu d'une telle structure, décrites ci-dessus uniquement à titre d'exemples illustratifs. La portée de l'invention est toutefois définie par les revendications annexées.

## Revendications

1. Structure (1) de véhicule automobile, comprenant :
- deux poutres (23) d'arc pavillon (25), s'étendant longitudinalement relativement à ladite structure (1),
- un anneau arrière (29) transversal, reliant entre elles lesdites poutres (23) d'arc pavillon (25),
- un support de caisse (37), sur lequel est fixée, d'une part, une extrémité transversale (29a, 29b) dudit anneau arrière (29) et, d'autre part une extrémité arrière (41) d'au moins une desdites poutres (23) d'arc pavillon (25),
ladite structure (1) étant **caractérisée en ce qu'**elle comporte :
- une jambe limiteur d'effort (43), fixée sur ledit support de caisse (37), destinée à supporter une charnière de coffre arrière de véhicule et comportant au moins deux emboutis (45, 47) en marche d'escalier s'étendant verticalement relativement à ladite structure (1), et
- une bretelle anti-soulèvement (63) dudit support de caisse (37), agencée dans ladite structure (1) pour exercer un effort de compression sur une face supérieure (65) dudit support de caisse (37).

2. Structure (1) de véhicule automobile selon la revendication 1, **caractérisée en ce que** ladite bretelle anti-soulèvement (63) s'étend sensiblement longitudinalement le long d'au moins une desdites poutres (23) d'arc pavillon (25).

3. Structure (1) de véhicule automobile selon l'une des revendications 1 ou 2, **caractérisée en ce que** ladite bretelle anti-soulèvement (63) comporte une extrémité de fixation arrière (69) fixée sur ladite face supérieure (65) dudit support de caisse (37).

4. Structure (1) de véhicule automobile selon la revendication 3, **caractérisée en ce que** ladite extrémité de fixation arrière (69) de ladite bretelle anti-soulèvement (63) comporte une fourchette (71).

5. Structure (1) de véhicule automobile selon l'une quelconque des revendications 1 à 4, **caractérisée en ce que** ladite bretelle anti-soulèvement (63) comporte une extrémité de fixation avant (79) fixée sur une traverse transversale (27) de ladite structure (1), ladite traverse transversale (27) étant située en avant dudit anneau arrière (29) relativement à un axe longitudinal de ladite structure (1).

6. Structure (1) de véhicule automobile selon l'une quelconque des revendications 1 à 5, **caractérisée en ce que** ladite bretelle anti-soulèvement (63) comporte une face longitudinale (67) comportant, au niveau de l'une de ses extrémités, ladite extrémité de fixation arrière (69), et **en ce que** ladite bretelle anti-soulèvement (63) comporte un embouti de liaison (77) assurant la jonction entre ladite face longitudinale (67) et ladite extrémité de fixation arrière (69).

7. Structure (1) de véhicule automobile selon l'une quelconque des revendications 1 à 6, **caractérisée en ce que** ladite jambe limiteur d'effort (43) s'étend dans le prolongement transversal dudit anneau arrière (29).

8. Structure (1) de véhicule automobile selon l'une quelconque des revendications 1 à 7, **caractérisée en ce que** chacun desdits au moins deux emboutis (45, 47) en marche d'escalier de la jambe limiteur d'effort (43) comporte une première face (49, 57), sensiblement horizontale relativement à ladite structure (1) et une deuxième face (51, 59), s'étendant depuis une extrémité arrière (53, 61) de ladite première face (49, 57), sensiblement verticale relativement à ladite structure (1).

9. Structure (1) de véhicule automobile selon l'une quelconque des revendications 1 à 8, **caractérisée en ce que** la jambe limiteur d'effort (43) s'étend verticalement depuis ledit support de caisse (37) jusqu'à une gouttière (35) de la structure (1), destinée à border latéralement un coffre du véhicule.

10. Véhicule automobile comportant une structure (1) selon l'une quelconque des revendications 1 à 9.

## Patentansprüche

1. Kraftfahrzeugstruktur (1), die Folgendes umfasst:
- zwei sich in Längsrichtung relativ zu der Struktur (1) erstreckende Dachbogenträger (23) (25),
- einem hinteren Querring (29), der die Dachbogenträger (23) (25) miteinander verbindet,
- einem Aufbauträger (37), an dem einerseits ein Querende (29a, 29b) des hinteren Rings (29) und andererseits ein hinteres Ende (41) wenigstens eines der Dachbogenträger (23) (25) befestigt ist, Diese Struktur (1) ist **dadurch gekennzeichnet, dass** sie folgendes umfasst:
- ein an dem Aufbauträger (37) befestigtes Kraftbegrenzungsbein (43) zur Aufnahme eines Fahrzeug-Heckkofferraumscharniers mit mindestens zwei sich senkrecht zu dem Aufbau (1) erstreckenden treppenförmigen Ansätzen (45, 47) und
- ein in der Struktur (1) angeordneter Anti-Heben-Riemen (63) des Aufbaus (37), um eine Druckkraft auf eine Oberseite (65) des Aufbaus (37) auszuüben.

2. Kraftfahrzeugstruktur (1) nach Anspruch 1, **dadurch gekennzeichnet, dass** sich der Antihubkran (63) im Wesentlichen längs entlang wenigstens eines der Dachbogenträger (23) (25) erstreckt.

3. Kraftfahrzeugstruktur (1) nach einem der Ansprüche 1 oder 2, **dadurch gekennzeichnet, dass** der Antihubbund (63) ein hinteres Befestigungsende (69) aufweist, das an der oberen Fläche (65) des Aufbauträgers (37) befestigt ist.

4. Kraftfahrzeugstruktur (1) nach Anspruch 3, **dadurch gekennzeichnet, dass** das hintere Befestigungsende (69) des Antihebestrebens (63) eine Gabel (71) aufweist.

5. Kraftfahrzeugstruktur (1) nach einem der Ansprüche 1 bis 4, **dadurch gekennzeichnet, dass** der Antihubbund (63) ein vorderes Befestigungsende (79) aufweist, das an einem Querträger (27) der Struktur (1) befestigt ist, wobei der Querträger (27) relativ zu einer Längsachse der Struktur (1) vor dem hinteren Ring (29) angeordnet ist.

6. Kraftfahrzeugstruktur (1) nach einem der Ansprüche 1 bis 5, **dadurch gekennzeichnet, dass** der Antihubbund (63) eine Längsfläche (67) aufweist, die an einem ihrer Enden das hintere Befestigungsende (69) aufweist, und dass der Antihubbbund (63) einen Verbindungsstutzen (77) aufweist, der die Verbindung zwischen der Längsfläche (67) und dem hinteren Befestigungsende (69) sicherstellt.

7. Kraftfahrzeugstruktur (1) nach einem der Ansprüche 1 bis 6, **dadurch gekennzeichnet, dass** sich der Kraftbegrenzungsschenkel (43) in der transversalen Verlängerung des hinteren Rings (29) erstreckt.

8. Kraftfahrzeugstruktur (1) nach einem der Ansprüche 1 bis 7, **dadurch gekennzeichnet, dass** jedes der mindestens zwei Treppenstanzprägungen (45, 47) des Kraftbegrenzungsbeins (43) eine erste Fläche (49, 57), die im Wesentlichen horizontal in Bezug auf die Struktur (1) ist, und eine zweite Fläche (51, 59) aufweist, die sich von einem hinteren Ende (53, 61) der ersten Fläche (49, 57), die im Wesentlichen vertikal in Bezug auf die Struktur (1) ist, erstreckt.

9. Kraftfahrzeugstruktur (1) nach einem der Ansprüche 1 bis 8, **dadurch gekennzeichnet, dass** sich der Kraftbegrenzungsschenkel (43) vertikal von dem Aufbauträger (37) zu einer Rinne (35) der Struktur (1) erstreckt, die dazu bestimmt ist, einen Kofferraum des Fahrzeugs seitlich zu flankieren.

10. Kraftfahrzeug mit einer Struktur (1) nach einem der Ansprüche 1 bis 9.

## Claims

1. Motor vehicle structure (1), comprising:
two roof (23) arch beams (25) extending longitudinally relative to said structure (1),
a transverse rear ring (29) interconnecting said roof (23) arch beams (25),
body support (37), on which is fixed, on the one hand, a transverse end (29a, 29b) of said rear ring (29) and, on the other hand, a rear end (41) of at least one of said roof (23) arch beams (25),
said structure (1) being **characterised in that** it comprises:
force limiting leg (43), fixed to said body support (37), intended to support a rear trunk hinge and comprising at least two stamped portions (45, 47) in staircase operation extending vertically relative to said structure (1), and
an anti-lifting strap (63) of said body support (37), arranged in said frame (1) to exert a compression force on an upper face (65) of said body support (37).

2. Motor vehicle structure (1) according to Claim 1, **characterised in that** said anti-lift shoulder strap (63) extends substantially longitudinally along at least one of said roof (23) arch beams (25).

3. A motor vehicle structure (1) according to one of Claims 1 or 2, wherein said anti-lift shoulder strap (63) comprises a rear fixing end (69) fixed to said upper face (65) of said body support (37).

4. A motor vehicle structure (1) according to claim 3, wherein said rear fixing end (69) of said anti-lift shoulder strap (63) comprises a fork (71).

5. Motor vehicle structure (1) according to any one of Claims 1 to 4, **characterised in that** said anti-lift shoulder strap (63) comprises a front fixing end (79) fixed to a transverse cross-member (27) of said structure (1), said transverse cross-member (27) being situated in front of said rear ring (29) relative to a longitudinal axis of said structure (1).

6. A motor vehicle structure (1) according to any one of claims 1 to 5, **characterised in that** said anti-lift shoulder strap (63) comprises a longitudinal face (67) comprising, at the level of one of its ends, said rear fastening end (69), and **in that** said anti-lift shoulder strap (63) comprises a connecting stamped portion (77) ensuring the junction between said longitudinal face (67) and said rear fastening end (69).

7. Motor vehicle structure (1) according to any one of Claims 1 to 6, **characterised in that** said force-limiting leg (43) extends in the transverse extension of said rear ring (29).

8. A motor vehicle structure (1) according to any one of claims 1 to 7, wherein each of said at least two stamped portions (45, 47) of the force-limiting leg (43) in a staircase operation comprises a first face (49, 57), substantially horizontal relative to said structure (1) and a second face (51, 59), extending from a rear end (53, 61) of said first face (49, 57), substantially vertical relative to said structure (1).

9. A motor vehicle structure (1) according to any one of claims 1 to 8, **characterised in that** the force-limiting leg (43) extends vertically from said body support (37) to a gutter (35) of the structure (1), intended to border a trunk of the vehicle laterally.

10. Motor vehicle comprising a structure (1) according to any one of Claims 1 to 9.
